# EUROPEAN PATENT APPLICATION

(11) **EP 4 852 313 A1**
(43) Date of publication of application: **09.12.2026**
(21) Application number: 26183174.7
(22) Date of filing: 08.04.2025
(51) Int. Cl.: H02S 50/00, H02S 50/15

(54) **A CONTROL SYSTEM AND A METHOD FOR CONTROLLING A PHOTOVOLTAIC MODULE**

(62) Document number(s) of the earlier application(s) in accordance with Art. 76 EPC: 25718346.7 / 4 846 565
(71) Applicant: Etec Automation Oy, 55120 Imatra (FI)
(72) Inventor: HUOMO, Miko, 55120 Imatra (FI); HJELMMAN, Toni, 55120 Imatra (FI); RÄTY, Lasse, 55120 Imatra (FI); TANSKANEN, Pasi, 55120 Imatra (FI)
(74) Representative: Väänänen, Janne Kalervo

(57) **Abstract**

A control system for controlling a photovoltaic module (101) comprises a drive mechanism (102) configured to adjust the tilt angle (φ) of the photovoltaic module and a controller (104) communicatively connected to the drive mechanism and configured to control the tilt angle. The controller is configured to control the tilt angle according to time-of-day to track the sun, to receive weather data, and to determine whether to track the sun or to drive the tilt angle to a snow removal value of at least 80 degrees based on the weather data. The controller is configured to receive, from a data transfer network (110), weather forecast data that represents at least part of the weather data.

## Description

### Field

The invention relates generally to photovoltaic "PV" energy production. More particularly, the invention relates to a control system, a method, and a computer program for controlling a photovoltaic module. Furthermore, the disclosure relates to a photovoltaic system.

### Background

A photovoltaic system comprises typically one or more photovoltaic modules and one or more network converters for supplying electric power produced by the aforementioned photovoltaic modules to an alternating voltage power grid or to a direct voltage power grid. Each photovoltaic module may comprise, for example, an array of photovoltaic elements. Furthermore, the photovoltaic system may comprise a drive mechanism configured to adjust the tilt angle of a photovoltaic surface of a photovoltaic module or the tilt angles of photovoltaic surfaces of a group of photovoltaic modules. The drive mechanism may comprise, for example, a worm gear for turning a photovoltaic module or a group of photovoltaic modules. The photovoltaic system may comprise a controller configured to control the tilt angle according to e.g. the time-of-day to track the sun and thereby to maximize the output power of the photovoltaic system.

In a cold climate during wintertime, an inherent challenge related to photovoltaic systems of the kind mentioned above is snow accumulation on structures of a photovoltaic system. Snow accumulation on a surface of a photovoltaic module reduces photovoltaic energy production. Even minor snow accumulation on the photovoltaic surface has a detrimental effect on photovoltaic efficiency. Large snow accumulation prevents photovoltaic energy production completely. Furthermore, accumulated snow and ice may constitute a risk for structural integrity of photovoltaic system.

Publication WO2022177453 describes a method for snow and ice removal from photovoltaic modules. In the method of WO2022177453, snow and ice are removed from the photovoltaic modules using heat generated by these photovoltaic modules as they act as resistors for back-feeding current flowing through them. The back-feeding current can be supplied to the photovoltaic modules from e.g. batteries which have been earlier charged by the photovoltaic modules. An inconvenience related to the method of WO2022177453 is that a significant part of total energy produced by the photovoltaic modules may be needed for the snow and ice removal.

### Summary

The following presents a simplified summary to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new control system for controlling at least one photovoltaic module. The control system comprises:
- a drive mechanism configured to adjust the tilt angle of the photovoltaic module, zero tilt angle corresponding to a situation in which a photovoltaic surface of the photovoltaic module is horizontal and faces upwards, and
- a controller communicatively connected to the drive mechanism and configured to control the tilt angle of the photovoltaic module.

The controller is configured to control the tilt angle according to time-of-day to track the sun, to receive weather data, and to determine whether to track the sun or to drive the tilt angle to a snow removal value based on the weather data, the snow removal value of the tilt angle being at least 80 degrees. The controller is configured to receive, from a data transfer network, weather forecast data representing at least part of the weather data.

The controller can be, for example, configured to utilize an artificial intelligence "Al" service provided via the data transfer network when assessing whether to track the sun or to drive the tilt angle to the snow removal value.

In many situations, gravity is sufficient to remove snow especially in cases in which the photovoltaic surface is turned to the vertical or near vertical position soon enough after snow accumulation has begun to develop. By utilizing the weather forecast data, the photovoltaic surface can be turned to the vertical or near vertical position proactively e.g. already at the beginning of, or prior to, a snowfall. Thus, in many situations, accumulation of snow can be avoided or at least reduced and thus the risk of needing energy to melt down snow can be minimized.

In accordance with the invention, there is also provided a new photovoltaic system that comprises:
- at least one photovoltaic module, and
- a control system according to the invention for controlling the photovoltaic module.

In accordance with the invention, there is also provided a new method for controlling a photovoltaic module. The method comprises:
- controlling a drive mechanism to adjust a tilt angle of the photovoltaic module, zero tilt angle corresponding to a situation in which a photovoltaic surface of the photovoltaic module is horizontal and faces upwards,
- controlling the tilt angle according to time-of-day to track the sun,
- receiving weather data, and
- determining whether to track the sun or to drive the tilt angle to a snow removal value based on the weather data, the snow removal value of the tilt angle being at least 80 degrees.

The method comprises receiving, from a data transfer network, weather forecast data representing at least part of the weather data.

Various embodiments of the invention can be computer implemented invention "CII" embodiments. Therefore, in accordance with the invention, there is also provided a new computer program for controlling a drive mechanism configured to adjust a tilt angle of a photovoltaic module. The computer program comprises computer executable instructions for controlling a programmable processing system to:
- control the tilt angle according to time-of-day to track the sun,
- receive weather data, and
- determine whether to track the sun or to drive the tilt angle to a snow removal value based on the weather data, the snow removal value of the tilt angle being at least 80 degrees,
- receive, from a data transfer network, weather forecast data representing at least part of the weather data.

In accordance with the invention, a new computer program product is also provided. The computer program product comprises a non-volatile computer readable medium, e.g. a flash memory or a compact disc "CD", encoded with a computer program according to the invention.

Various exemplifying and non-limiting embodiments of the invention are described in accompanied dependent claims.

Exemplifying and non-limiting embodiments of the invention both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of un-recited features. Furthermore, the word "each" is non-exclusive so that a limitation "an entity comprising one or more elements each having a given technical feature" does not exclude the entity from comprising additional elements not having the given technical feature.

The features recited in dependent claims are mutually freely combinable unless otherwise explicitly stated.

Furthermore, it is to be understood that the use of "a" or "an", i.e. a singular form, throughout this document does not exclude a plurality.

### Brief description of figures

Exemplifying and non-limiting embodiments of the invention and their advantages are explained in greater detail below in the sense of examples and with reference to the accompanying drawings, in which:
Figure 1 illustrates a photovoltaic system according to an exemplifying and non-limiting embodiment, and
Figure 2 shows a flowchart of a method according to an exemplifying and non-limiting embodiment for controlling a photovoltaic module.

### Description of exemplifying and non-limiting embodiments

The specific examples provided in the description below should not be construed as limiting the scope and/or the applicability of the invention. Lists and groups of examples provided in the description are not exhaustive unless otherwise explicitly stated.

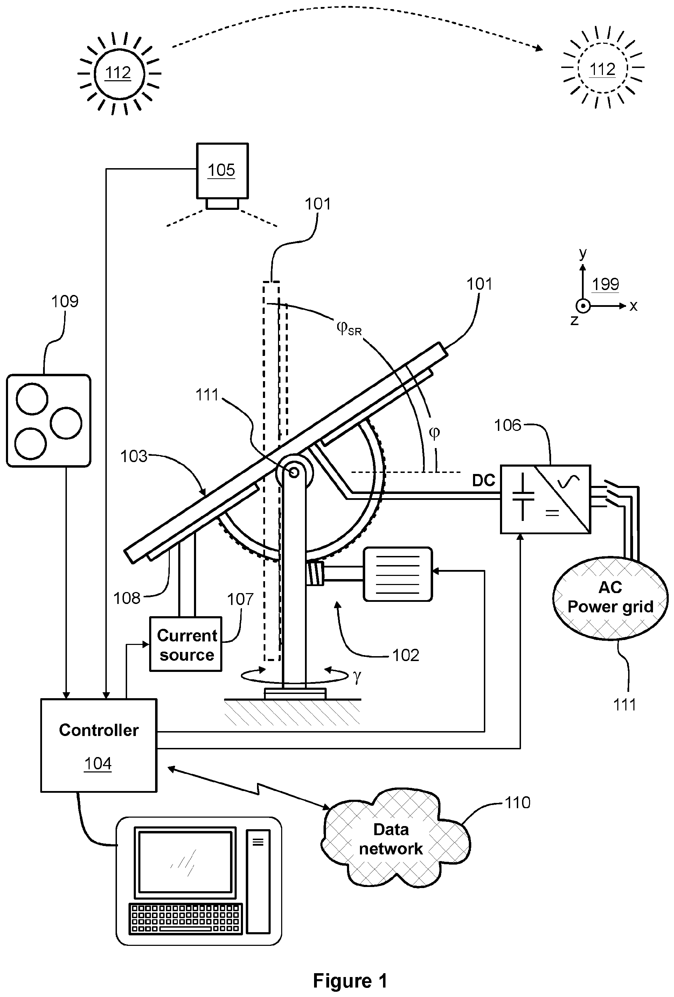

Figure 1 illustrates a photovoltaic "PV" system according to an exemplifying and non-limiting embodiment. The photovoltaic system comprises one or more photovoltaic modules, one of which is shown in figure 1 and is denoted with reference 101. Each photovoltaic module may comprise, for example, an array of electrically interconnected photovoltaic elements. The photovoltaic module 101 is rotatably supported with respect to a pivot axis 111 that is parallel with the z-axis of a coordinate system 199. The photovoltaic module 101 produces direct "DC" voltage when light falls on a photovoltaic surface 103 of the photovoltaic module 101. The photovoltaic system comprises a network converter 106 configured to convert the DC voltage produced by the photovoltaic module 101 into three-phase alternating "AC" voltage of an AC voltage power grid 111.

The photovoltaic system comprises a control system according to an exemplifying and non-limiting embodiment and configured to control the photovoltaic module 101. The control system comprises a drive mechanism 102 configured to adjust a tilt angle φ of the photovoltaic module 101. In this document, the tilt angle φ is defined so that zero tilt angle, i.e. φ = 0, corresponds to a situation in which the photovoltaic surface 103 of the photovoltaic module 101 is horizontal and faces upwards. In this exemplifying case, the drive mechanism 102 comprises a worm gear and an electric motor, but different drive mechanisms are also possible in conjunction with different embodiments of the invention.

The control system comprises a controller 104 that is communicatively connected to the drive mechanism 102. The controller 104 is configured to control the tilt angle φ of the photovoltaic module 101. The controller 104 can be, for example, configured to control the tilt angle φ according to the time-of-day to track the sun 112 and thereby to maximize the output power of the photovoltaic module 101. In an exemplifying and non-limiting embodiment, the control system comprises a mechanism for controlling an azimuth angle γ illustrated in figure 1. The control of the azimuth angle can be used to improve the accuracy in tracking the sun.

The control system comprises a snow detector 105 that is communicatively connected to the controller 104. The snow detector 105 is configured to detect whether there is snow accumulated on the photovoltaic surface 103 of the photovoltaic module 101. The snow is not shown in figure 1. The snow detector 105 may comprise, for example, a machine-vision system configured to monitor the photovoltaic surface 103 of the photovoltaic module 101. The machine-vision system may comprise, for example, an electro optical "EO" camera, an infrared "IR" camera, and/or a multispectral camera so that the photovoltaic surface 103 is in the field-of-view "FoV" of the/each camera. It is, however, also possible to use other devices, e.g. capacitive and/or galvanic sensors, to detect whether there is snow accumulated on the photovoltaic surface 103. Thus, the invention is not limited to any specific types of devices to detect whether there is snow on the photovoltaic surface 103.

The controller 104 is configured to drive the tilt angle φ to a snow removal value φ_{SR} in response to a detection that there is snow accumulated on the photovoltaic surface 103. The snow removal value φ_{SR} of the tilt angle can be at least 80, or at least 85 degrees, or at least 88 degrees. The upper limit of the snow removal value φ_{SR} can be e.g. from 90 degrees to 100 degrees. Therefore, the photovoltaic surface 103 is turned to a vertical or near vertical position in response to a detection of snow accumulation. In many situations, gravity is sufficient to remove snow especially in cases in which the photovoltaic surface 103 is turned to the vertical or near vertical position soon enough after snow accumulation has begun to develop. In figure 1, the photovoltaic module 101 is depicted with dashed lines in the position in which the photovoltaic surface 103 is vertical or near vertical i.e. the tilt angle φ has the snow removal value φ_{SR}, φ = φ_{SR}.

In a control system according to an exemplifying and non-limiting embodiment, the controller 104 is configured to control the network converter 106 to supply back-feeding current to the photovoltaic module 101 to warm up the photovoltaic module 101 in response to detection of snow accumulated on the photovoltaic surface 103. The warming of the photovoltaic module 101 ensures that the snow drops down from the photovoltaic surface 103 when the photovoltaic surface 103 is turned to the vertical or near vertical position.

In a control system according to an exemplifying and non-limiting embodiment, the controller 104 is configured to control the network converter 106 to supply back-feeding current to the photovoltaic module 101 to warm up the photovoltaic module 101 in response to a situation in which the tilt angle has the snow removal value, i.e. φ = φ_{SR}, and snow is still detected on the photovoltaic surface 103. In this exemplifying embodiment, snow is first tried to be removed without warming the photovoltaic module 101 to save energy, and the photovoltaic module 101 is warmed up only when the turning of the photovoltaic surface 103 to the vertical or near vertical position is not sufficient to remove the snow.

In a control system according to an exemplifying and non-limiting embodiment, the controller 104 is configured to control a current source 107 to supply current to a heater resistor 108 that is in a thermal conductive relation with the photovoltaic module 101 to warm up the photovoltaic module 101 in response to a detection of snow accumulated on the photovoltaic surface 103, or in response to a situation in which the tilt angle has the snow removal value , i.e. φ = φ_{SR}, and snow is still detected on the photovoltaic surface 103.

In a control system according to an exemplifying and non-limiting embodiment, the controller 104 is configured to both i) control the current source 107 to supply current to the heater resistor 108 and ii) control the network converter 106 to supply back-feeding current to the photovoltaic module 101 in response to a detection of snow accumulated on the photovoltaic surface 103, or in response to a situation in which the tilt angle has the snow removal value , i.e. φ = φ_{SR}, and snow is still detected on the photovoltaic surface 103.

In an exemplifying and non-limiting embodiment, the photovoltaic surface 103 is turned to the vertical or near vertical position proactively e.g. already at the beginning of, or before, a snowfall. Thus, in many situations, accumulation of snow can be avoided or at least reduced and thus a risk for needing energy to warm up the photovoltaic surface 103 can be minimized. In a control system according to an exemplifying and non-limiting embodiment, the controller 104 is configured to receive weather data, and to determine whether to track the sun or to drive the tilt angle φ to the snow removal value φ_{SR} based on the weather data. The weather data may comprise, for example, weather forecast data received by the controller 104 from a data transfer network 110. A control system according to an exemplifying and non-limiting embodiment comprises one or more sensors 109 communicatively connected to the controller 104. The one or more sensors 109 is/are configured to measure one or more of following items of the weather data: a data item expressing visibility, a data item expressing cloudiness, a data item expressing temperature, a data item expressing a dew point, and a data item expressing snowfall. The controller 104 can be configured to utilize e.g. an artificial intelligence "Al" service provided via the data transfer network 110 when assessing whether to track the sun or to drive the tilt angle φ to the snow removal value φ_{SR}.

The implementation of the controller 104 can be based on one or more processor circuits, each of which can be an analog processor circuit, a programmable digital processor circuit provided with appropriate software, a dedicated hardware processor such as for example an application specific integrated circuit "ASIC", or a configurable hardware processor such as for example a field programmable gate array "FPGA". Furthermore, the controller 104 comprise one or more memory devices such as e.g. flash memory circuits and/or random-access memory "RAM" circuits.

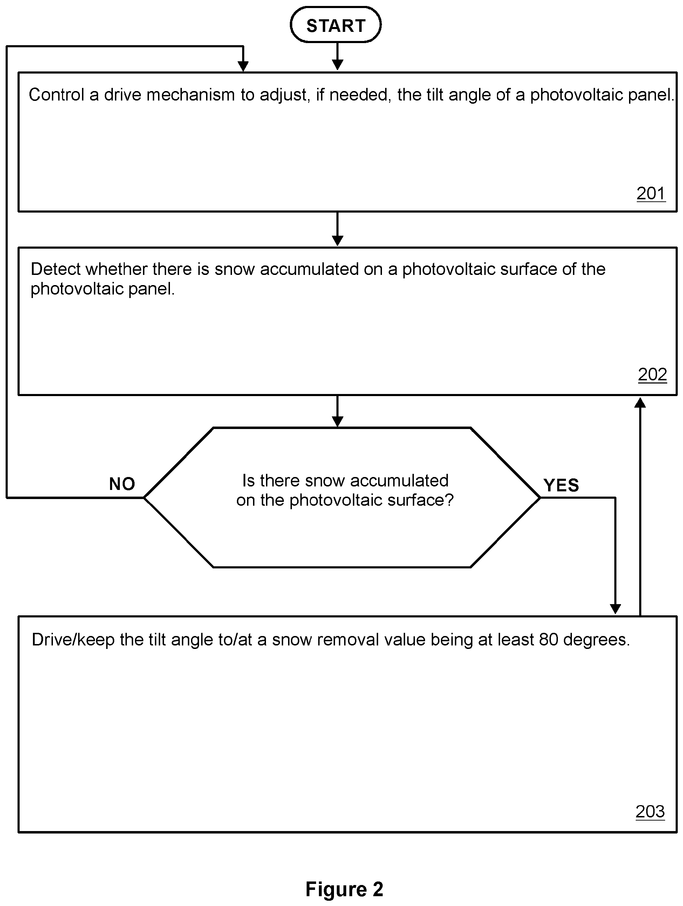

Figure 2 shows a flowchart of a method according to an exemplifying and non-limiting embodiment for controlling a photovoltaic module. The method comprises the following actions:
- action 201: controlling a drive mechanism to adjust, if needed, the tilt angle of the photovoltaic module,
- action 202: detecting whether there is snow accumulated on a photovoltaic surface of the photovoltaic module, and
- action 203: driving/keeping the tilt angle to/at a snow removal value, at least 80 degrees, in response to detection of snow accumulated on the photovoltaic surface of the photovoltaic module.

In a method according to an exemplifying and non-limiting embodiment, the snow removal value of the tilt angle is at least 85 degrees. In a method according to an exemplifying and non-limiting embodiment, the snow removal value of the tilt angle is at least 88 degrees.

A method according to an exemplifying and non-limiting embodiment comprises controlling a network converter connected to the photovoltaic module to supply back-feeding current to the photovoltaic module to warm up the photovoltaic module in response to a detection of snow accumulated on the photovoltaic surface of the photovoltaic module.

A method according to an exemplifying and non-limiting embodiment comprises controlling the network converter connected to the photovoltaic module to supply back-feeding current to the photovoltaic module to warm up the photovoltaic module in response to a situation in which i) the tilt angle has the snow removal value and ii) snow is still detected on the photovoltaic surface of the photovoltaic module.

A method according to an exemplifying and non-limiting embodiment comprises controlling a current source to supply current to a heater resistor being in a thermal conductive relation with the photovoltaic module to warm up the photovoltaic module in response to a detection of snow accumulated on the photovoltaic surface of the photovoltaic module.

A method according to an exemplifying and non-limiting embodiment comprises controlling a current source to supply current to a heater resistor being in a thermal conductive relation with the photovoltaic module to warm up the photovoltaic module in response to a situation in which i) the tilt angle has the snow removal value and ii) snow is still detected on the photovoltaic surface of the photovoltaic module.

A method according to an exemplifying and non-limiting embodiment comprises controlling the tilt angle according to time-of-day to track the sun, to receive weather data, and to determine whether to track the sun or to drive the tilt angle to the snow removal value based on the weather data. A method according to an exemplifying and non-limiting embodiment comprises receiving weather forecast data from a data transfer network, where the weather forecast data represents at least part of the weather data. A method according to an exemplifying and non-limiting embodiment comprises measuring one or more of the following items of the weather data: a data item expressing visibility, a data item expressing cloudiness, a data item expressing temperature, a data item expressing a dew point, and/or a data item expressing snowfall.

In a method according to an exemplifying and non-limiting embodiment, snow accumulated on the photovoltaic surface of the photovoltaic module is detected with a machine-vision system configured to monitor the photovoltaic surface of the photovoltaic module. In a method according to an exemplifying and non-limiting embodiment, the machine-vision system comprises an electro optical camera, an infrared camera, and/or a multispectral camera.

A computer program according to an exemplifying and non-limiting embodiment comprises computer executable instructions for controlling a programmable processing system to carry out actions related to a method according to any of the above-described exemplifying and non-limiting embodiments.

A computer program according to an exemplifying and non-limiting embodiment comprises software modules for controlling a drive mechanism configured to adjust the tilt angle of a photovoltaic module of a photovoltaic system. The software modules comprise computer executable instructions for controlling a programmable processing system to:
- receive at least one indicator signal from a snow detector communicatively connected to the programmable processing system and configured to detect snow accumulated on a photovoltaic surface of the photovoltaic module, and
- control the drive mechanism to drive the tilt angle to a snow removal value in response to a situation in which the indicator signal expresses detection of snow accumulated on the photovoltaic surface, the snow removal value of the tilt angle being at least 80 degrees.

The software modules can be, for example, subroutines or functions implemented with programming tools suitable for the programmable processing system.

A computer program product according to an exemplifying and non-limiting embodiment comprises a computer readable medium, e.g. a flash memory or a compact disc "CD", encoded with a computer program according to an exemplifying embodiment.

A signal according to an exemplifying and non-limiting embodiment is encoded to carry information defining a computer program according to an exemplifying embodiment.

The specific examples provided in the description given above should not be construed as limiting the scope and/or the applicability of the invention. Lists and groups of examples provided in the description given above are not exhaustive unless otherwise explicitly stated.

## Claims

1. A control system for controlling at least one photovoltaic module (101), the control system comprising:
- a drive mechanism (102) configured to adjust a tilt angle (φ) of the photovoltaic module, zero tilt angle (φ = 0) corresponding to a situation in which a photovoltaic surface (103) of the photovoltaic module is horizontal and faces upwards, and
- a controller (104) communicatively connected to the drive mechanism and configured to control the tilt angle of the photovoltaic module,
wherein the controller is configured to control the tilt angle according to time-of-day to track the sun, to receive weather data, and to determine whether to track the sun or to drive the tilt angle to a snow removal value (φ_{SR}) based on the weather data, the snow removal value of the tilt angle being at least 80 degrees, **characterized in that** the controller is configured to receive, from a data transfer network (110), weather forecast data representing at least part of the weather data.

2. A control system according to claim 1, wherein the snow removal value (φ_{SR}) of the tilt angle is at least 85 degrees.

3. A control system according to claim 1, wherein the snow removal value (φ_{SR}) of the tilt angle is at least 88 degrees.

4. A control system according to any one of claims 1-3, wherein the control system comprises a snow detector (105) communicatively connected to the controller and configured to detect snow accumulated on the photovoltaic surface of the photovoltaic module, and the controller is configured to control a network converter (106) connected to the photovoltaic module to supply back-feeding current to the photovoltaic module to warm up the photovoltaic module in response to the detection of the snow accumulated on the photovoltaic surface of the photovoltaic module.

5. A control system according to any one of claims 1-3, wherein the control system comprises a snow detector (105) communicatively connected to the controller and configured to detect snow accumulated on the photovoltaic surface of the photovoltaic module, and the controller is configured to control a network converter (106) connected to the photovoltaic module to supply back-feeding current to the photovoltaic module to warm up the photovoltaic module in response to a situation in which the tilt angle has the snow removal value and the snow is still detected on the photovoltaic surface of the photovoltaic module.

6. A control system according to any one of claims 1-5, wherein the control system comprises a snow detector (105) communicatively connected to the controller and configured to detect snow accumulated on the photovoltaic surface of the photovoltaic module, and the controller is configured to control a current source (107) to supply current to a heater resistor (108) being in a thermal conductive relation with the photovoltaic module to warm up the photovoltaic module in response to the detection of the snow accumulated on the photovoltaic surface of the photovoltaic module.

7. A control system according to any one of claims 1-5, wherein the control system comprises a snow detector (105) communicatively connected to the controller and configured to detect snow accumulated on the photovoltaic surface of the photovoltaic module, and the controller is configured to control a current source (107) to supply current to a heater resistor (108) being in a thermal conductive relation with the photovoltaic module to warm up the photovoltaic module in response to a situation in which the tilt angle has the snow removal value and the snow is still detected on the photovoltaic surface of the photovoltaic module.

8. A control system according to claim 1, wherein the control system comprises one or more sensors (109) communicatively connected to the controller and configured to measure one or more of following items of the weather data: a data item expressing visibility, a data item expressing cloudiness, a data item expressing temperature, a data item expressing a dew point, and a data item expressing snowfall.

9. A control system according to any one of claims 4-7, wherein the snow detector (105) comprises a machine-vision system configured to monitor the photovoltaic surface of the photovoltaic module.

10. A control system according to claim 9, wherein the machine-vision system comprises one or more of following: an electro optical camera, an infrared camera, a multispectral camera.

11. A photovoltaic system comprising:
- at least one photovoltaic module (101),
- a control system according to any one of claims 1-10 for controlling the photovoltaic module.

12. A method for controlling a photovoltaic module, the method comprising:
- controlling a drive mechanism to adjust a tilt angle (φ) of the photovoltaic module, zero tilt angle corresponding to a situation in which a photovoltaic surface of the photovoltaic module is horizontal and faces upwards,
- controlling the tilt angle according to time-of-day to track the sun,
- receiving weather data, and
- determining whether to track the sun or to drive the tilt angle to a snow removal value based on the weather data, the snow removal value of the tilt angle being at least 80 degrees,
**characterized in that** the method comprises receiving, from a data transfer network, weather forecast data representing at least part of the weather data.

13. A method according to claim 12, wherein the method comprises:
- detecting snow accumulated on the photovoltaic surface of the photovoltaic module, and
- controlling a network converter connected to the photovoltaic module to supply back-feeding current to the photovoltaic module to warm up the photovoltaic module in response to a situation in which the tilt angle has the snow removal value and the snow is still detected on the photovoltaic surface of the photovoltaic module.

14. A method according to claim 12 or 13, wherein the method comprises:
- detecting snow accumulated on the photovoltaic surface of the photovoltaic module, and
- controlling a current source to supply current to a heater resistor being in a thermal conductive relation with the photovoltaic module to warm up the photovoltaic module in response to a situation in which the tilt angle has the snow removal value and the snow is still detected on the photovoltaic surface of the photovoltaic module.

15. A computer program for controlling a drive mechanism configured to adjust a tilt angle of a photovoltaic module, zero tilt angle corresponding to a situation in which a photovoltaic surface of the photovoltaic module is horizontal and faces upwards, the computer program comprising computer executable instructions for controlling a programmable processing system to:
- control the tilt angle according to time-of-day to track the sun,
- receive weather data, and
- determine whether to track the sun or to drive the tilt angle to a snow removal value (φ_{SR}) based on the weather data, the snow removal value of the tilt angle being at least 80 degrees,
**characterized in that** the computer program comprises computer executable instructions for controlling the programmable processing system to receive, from a data transfer network, weather forecast data representing at least part of the weather data.
